# EUROPEAN PATENT SPECIFICATION

(11) **EP 3 458 870 B1**
(45) Date of publication and mention of the grant of the patent: **22.04.2020**
(21) Application number: 16727334.1
(22) Date of filing: 20.05.2016
(51) Int. Cl.: G01S 7/03, G01S 13/00, G01S 13/87, H01Q 21/00, H01P 5/107, H01P 3/16, H01Q 21/28, H01Q 1/32

(54) **A WAVEGUIDE ARRANGEMENT**
WELLENLEITERANORDNUNG
AGENCEMENT DE GUIDE D'ONDES

(43) Date of publication of application: 27.03.2019
(73) Proprietor: IMEC vzw, 3001 Leuven (BE)
(72) Inventor: OCKET, Ilja, 3001 Leuven (BE)
(74) Representative: Gevers Patents
(86) International application number: PCT/EP2016/061452
(87) International publication number: WO 2017/198314

(56) References cited:
- DE-A1- 19 636 850
- US-A1- 2010 171 674
- SATOSHI FUKUDA ET AL: "A 12.5+12.5 Gb/s Full-Duplex Plastic Waveguide Interconnect", IEEE JOURNAL OF SOLID-STATE CIRCUITS, IEEE SERVICE CENTER, PISCATAWAY, NJ, USA, vol. 46, no. 12, 1 December 2011 (2011-12-01), pages 3113-3125, XP011379217, ISSN: 0018-9200, DOI: 10.1109/JSSC.2011.2168870 cited in the application

## Description

### Technical field

The present disclosure relates to a waveguide arrangement, particularly a waveguide arrangement for coupling a plurality of modules to a source.

### Background art

Multi-static radar systems combine different monostatic or bi-static radar subsystems to extract richer information about objects present in a surveyed scene. If the signals used by the different subsystems have a correlated phase noise, i.e. they are coherent, additional performance enhancement can be achieved, because all the transmitters and receivers act like one large multiple input multiple output (MIMO) radar system, i.e. a multi-static radar system having both multiple transmitter modules and multiple receiver modules. To achieve this coherence between the reference signals used by each subsystem, the output of the local oscillator used by the subsystems needs to be distributed over all of them. This is done by using a source which generates the local oscillator signal and a waveguide to distribute the source signal to the different subsystems.

In terms of performance, i.e. the decibel loss per metre, a traditional rectangular metal waveguide is the best option for frequencies in the lower millimetre wave range. However, a rectangular metal waveguide is bulky and difficult to integrate with a set of packaged systems-on-chip (SOCs). Lower weight metal waveguides, e.g. a foil placed around a dielectric core, have been demonstrated, but are still relatively expensive. On the other hand, thin flexible printed circuit boards (PCBs) are lightweight and easily integrated with packaged SOCs, but use planar transmission lines which tend to have a relatively high loss, especially at millimetre wave frequencies, i.e. the frequency range of the local oscillator.

In the prior art this problem has been avoided by using a plastic rectangular waveguide that interconnects two subsystems. The plastic waveguide is attached with one end to one of the subsystems and with the other end to another of the subsystems (e.g. Fukuda et al., "A 12.5+12.5 Gb/s Full-Duplex Plastic Waveguide Interconnect", IEEE Journal of Solid-State Circuits, Vol. 46, No. 12, pages 3113 to 3125, Dec. 2011). This approach entails using a plurality of individual plastic rectangular waveguides, each waveguide forming an end-to-end link between two modules and one waveguide forming an end-to-end link between the source and the first module. As such, the source signal has two conversions at each module, a conversion from the waveguide to the module and a reconversion from the module to the next waveguide. This type of arrangement has several disadvantages. First, including two interfaces per module, one for conversion and one for reconversion of the source signal, takes up more space on each module and the resulting modules are harder to manufacture. Secondly, as there are two interfaces per module the source signal also loses power twice for each module resulting in the need for a stronger source signal or a shorter waveguide arrangement.

DE 196 36 850 A1 discloses a phased-array antenna that uses a waveguide with a plurality of slots that act as couplers for coupling the wave guided in the waveguide to a plurality of connecting waveguides that lead the signal to phase shifter networks.

### Summary of the disclosure

It is an object of the present disclosure to provide a waveguide arrangement which can couple a source signal to a plurality of modules more efficiently.

This object is achieved according to the disclosure with a waveguide arrangement comprising: a continuous waveguide configured for guiding a signal provided by the source; and a plurality of interfaces, each interface being associated with one of the plurality of modules and being configured for transferring a part of the source signal guided in the waveguide to its associated module, wherein each interface comprises: a first layer configured for coupling the interface to the waveguide; a second layer configured for forming a fixed surface for mounting one of the plurality of modules; and a coupler configured for coupling the first layer to the module associated with the interface.

The continuous waveguide allows a continuous propagation of the source signal without needing a reconversion at each module. As such, the waveguide arrangement loses less power compared to the prior art as there is no need for reconverting the source signal at each module. Moreover, due to the continuous propagation of the source signal each module receives the exact same input signal which improves the coherence or phase noise correlation between the modules. Further, the modules are smaller as they do not need on-chip oscillators nor interfaces to reconvert the signal for transmission back to the waveguide thus saving space on the modules.

The first layer of the interface provides a mechanical connection between the waveguide and the coupler. The coupler design determines how much of the source signal is transferred to the module thus providing a flexible design depending on the relative fraction of the source signal required for transferral to a module. The fixed surface ensures that the entire module remains fixed so that the relevant parts are coupled with the source signal.

In an embodiment of the present disclosure, the first layer is perforated to form a low permittivity medium.

In this way, the first layer is effectively matched to the permittivity of the waveguide and does not substantially disturb the propagation of the source signal in the waveguide.

In an embodiment of the present disclosure, the coupler of each interface is a direct connection.

This direct connection ensures a minimal power loss of the signal during transition from the first layer to the module which in turn further increases the efficiency of the waveguide arrangement.

In an embodiment of the present disclosure, the waveguide has a crenelated surface, each crenel comprising a part of said first layer of one interface of the plurality of interfaces.

The crenelated surface ensures that the first layer is partly located inside the waveguide which provides an increased mechanical connection between the waveguide and the coupler.

In an embodiment of the present disclosure, the waveguide arrangement further comprises a first end-connector and a second end-connector, the first end-connector being connected to a first end of the waveguide and configured for connecting the waveguide to the source, and the second end-connector being connected to a second end of the waveguide and configured for connecting the waveguide to one of: a further module and a further waveguide.

By providing a module at the end of the waveguide, no source signal is wasted as the remaining part is directly fed into the module. Furthermore, by providing a connection to a further waveguide the waveguide arrangement may be made as long as needed if the source signal is strong enough. As such, the second end-connector increases the flexibility of the waveguide arrangement.

In an embodiment of the present disclosure the waveguide is formed by at least one of: a single-layer plastic; a multi-layer plastic; and a non-radiative dielectric guide.

These different materials allow a flexible design of the waveguide arrangement depending on the structure in which the waveguide arrangement needs to be installed.

In an embodiment of the present disclosure the waveguide has a length between 5 cm and 80 cm between adjacent modules.

In an embodiment of the present disclosure the waveguide has a length between 10 cm and 60 cm between adjacent modules.

It is another object of the present disclosure to provide a multi-static radar system comprising a source and a plurality of modules configured for transmitting a signal provided by the source and for receiving a signal corresponding to the transmitted signal in which the source signal is coupled to the plurality of modules more efficiently.

This is achieved according to the disclosure with a multi-static radar system in which the plurality of modules are coupled to the source using a waveguide arrangement as discussed above.

This multi-static radar system has the same advantages resulting from the use of the waveguide arrangement as discussed above. Furthermore, by using smaller modules with an easily correlated oscillator signal the angular and depth resolution of the multi-static radar system are improved since more modules can be used in the same space and each of the modules is correlated simultaneously.

In an embodiment of the present disclosure, the multi-static radar system is a multiple input multiple output (MIMO) radar system.

This offers the added advantages of a MIMO radar system to the advantages already discussed above of the multi-static radar system of the present disclosure.

It is a further object of the present disclosure to provide an automotive radar system installed in a vehicle.

This is achieved according to the disclosure with an automotive radar system comprising the multi-static radar system as discussed above.

This automotive radar system has the same advantages as the multi-static radar system discussed above.

It is yet another object of the present disclosure to provide a kit of parts for constructing the waveguide arrangement as discussed above.

This is achieved according to the disclosure with a kit of parts comprising: the continuous waveguide; the plurality of interfaces; a first end-connector configured for connecting the waveguide to a source; and a second end-connector configured for connecting the waveguide to one of: a further module and a further waveguide.

It is a further aim of the present disclosure to provide a method for operating a multi-static radar system comprising a source and a plurality of modules in which the source is coupled to the plurality of modules more efficiently.

This is achieved according to the disclosure with a method comprising: generating a signal in the source; coupling the source signal to the plurality of modules using the waveguide arrangement as discussed above; transmitting the source signal from a transmitter of the plurality of modules; receiving a signal corresponding to the transmitted signal in a receiver of the plurality of modules; and processing the received signal.

This method has the same advantages as the multi-static radar system discussed above.

### Brief description of the drawings

The disclosure will be further explained by means of the following description and the appended figures.
Figure 1 shows a waveguide arrangement of the present disclosure embedded in a bumper of a vehicle.
Figure 2 shows an individual module of the MIMO radar system of the present disclosure.
Figure 3 shows a cross-section through the waveguide arrangement of the present disclosure focussed near one module.

### Description of the disclosure

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes.

The present disclosure relates to a waveguide arrangement, particularly a waveguide arrangement for coupling a plurality of modules to a source. The present disclosure further relates a multi-static radar system, in particular a multiple input multiple output (MIMO) radar system, in which the modules are coupled to a source by the waveguide arrangement. The present disclosure also relates to a kit of parts for constructing the waveguide arrangement.

As used herein, the term "MIMO radar system" refers to a radar system comprising a plurality of transmit-receive modules, each module including at least one transmitter configured for transmitting a signal and at least one receiver configured for receiving a signal corresponding to the transmitted signal, which received signal ideally represents a reflection of the transmitted signal. The received signal is then processed to determine the object and/or the environment where the MIMO radar system is placed.

As used herein, the term "monostatic radar system" refers to a radar system which comprises a transmitter configured for transmitting a signal and a receiver configured for receiving a signal corresponding to the transmitted signal. The transmitter and the receiver are collocated. Typically, a transmitter and a receiver are referred to as being collocated when the distance between the transmitter antenna and the receiver antenna is up to twice the wavelength of the transmitted signal.

As used herein, the term "bi-static radar system" refers to a radar system which comprises a transmitter configured for transmitting a signal and a receiver configured for receiving a signal corresponding to the transmitted signal. The transmitter and the receiver are separated by a distance which is related to the expected distance between the bi-static radar system and the target. Typically, a transmitter and a receiver are referred to as forming a bi-static radar system when the distance between the transmitter antenna and the receiver antenna is at least ten times the wavelength of the transmitted signal.

As used herein, the term "multi-static radar system" refers to a radar system including multiple monostatic or bi-static radar subsystems with a shared area of coverage. As such, a multi-static radar system can comprise multiple transmitters with one receiver, i.e. a multiple input single output (MISO) radar system. Further, a multi-static radar system can comprise multiple receivers with one transmitter, i.e. a single input multiple output (SIMO) radar system. When a multi-static radar system comprises both multiple transmitters and multiple receivers it forms a MIMO radar system.

As used herein, the term "module" refers to one of: a transmit-receive module of a MIMO radar system; a transmit-receive module of a monostatic radar system; a transmitter of a bi-static radar system; a receiver of a bi-static radar system; a transmit-receive module of a multi-static radar system; a transmitter of a multi-static radar system; and a receiver of a multi-static radar system. Furthermore, the use of the term "modules" refers to a group comprising at least two modules wherein the modules may be of the same or different type, e.g. the term "modules" may refer a group of two modules comprising a transmit-receive module of a monostatic radar system and a transmitter of a multi-static radar system.

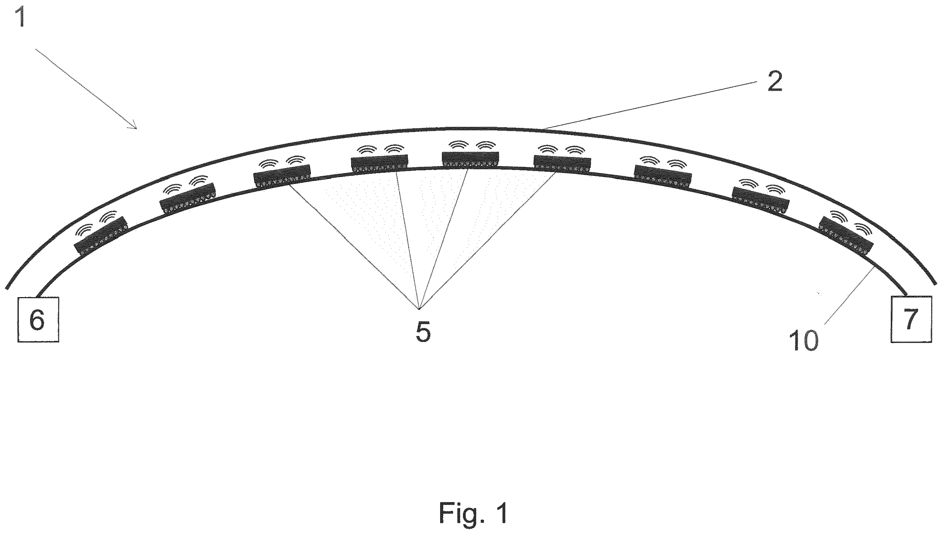

Figure 1 shows a waveguide arrangement 1 of the present disclosure embedded in a bumper 2 of a vehicle. It is to be appreciated to one skilled in the art that the MIMO radar system can also be embedded in other regions of a vehicle besides the bumper or simply be attached to the vehicle or can be used as a stationary system which is not embedded in a vehicle. Moreover, it is to be appreciated to one skilled in the art that the waveguide arrangement 1 of the present disclosure is not limited to a MIMO radar system but can also be used for more general multi-static radar systems.

The waveguide arrangement 1 of the present disclosure is used for coupling a plurality of modules 5 to a source (not shown). The waveguide arrangement 1 comprises a waveguide 10 configured for guiding a signal provided by the source and a plurality of interfaces 15. The source may connected to the waveguide 10 via an end-connector 6 as discussed below. Each of the interfaces 15 is associated with one of the plurality of modules 5 and is configured for coupling its associated module 5 to the waveguide 10 by transferring a part of the source signal guided in the waveguide 10 to its associated module 5. As can be seen in Figure 1 the waveguide 10 is a continuous structure which allows the source signal to propagate continuously without needing reconversion at each module 5. The waveguide arrangement 1 of the present disclosure thus loses less power compared to the prior art and is thus more efficient.

A further advantage of the waveguide arrangement 1 of the present disclosure is that the local oscillator represented by the source signal propagates in the same waveform continuously. As such, each module 5 receives the exact same input signal and not a signal that has been converted and reconverted multiple times during transmission in the waveguide 10 and the modules 5 as is the case in the prior art. Moreover, the modules 5 do not need on-chip oscillators nor interfaces to reconvert the signal for transmission back to the waveguide 10 thus saving space on the modules allowing the modules to be smaller in size. Moreover, smaller modules with an easily synchronized oscillator signal also improve the angular and depth resolution of the MIMO radar system as more modules can be used in the same space and each of the modules is correlated simultaneously.

As each of the interfaces 15 is configured for transferring a part of the source signal to its associated module 5, the signal strength of the source signal in the waveguide 10 decreases with each module 5. Typically, the signal strength decreases as 1/N with N being the total number of modules. The waveguide 10 itself can be formed by different materials. A metal-free structure is possible such as single- or multilayer polyimide or other suitable thin flexible substrates. Alternatively the waveguide 10 can be a non-radiative dielectric guide or an H-guide which are dielectric guides sandwiched between two metal planes.

The choice of waveguide 10 may also depend on the frequency range of the source signal. For frequencies in the range of around 20 GHz to 30 GHz, traditional rectangular metal waveguides provide the most efficient waveguide as they limit the propagation loss. Plastic waveguides are also feasible at these frequencies but need a large cross-section to limit the propagation loss. On the other hand, for frequencies above 100 GHz, plastic waveguides have a lower propagation loss than traditional rectangular metal waveguides without the need for a large cross-section. Depending on the materials used for the waveguides a cross-over point between traditional rectangular metal waveguides and plastic waveguides is around 60 GHz.

As mentioned above, the source signal may be fed into the waveguide 10 at one end of the waveguide 10 by an end-connector 6 which is known in the prior art (e.g. Fukuda et al., "A 12.5+12.5 Gb/s Full-Duplex Plastic Waveguide Interconnect", IEEE Journal of Solid-State Circuits, Vol. 46, No. 12, pages 3113 to 3125, Dec. 2011). It is to be appreciated for one skilled in the art that other end-connectors between the source and the waveguide 10 are also possible.

Naturally, the waveguide 10 also has a second end with a second end-connector 7. The second end of the waveguide 10 can be connected to a further module using an end-connector 7 as disclosed in the prior art, i.e. an end-to-end end-connector 7 which connects the second end of the waveguide 10 directly to a further module. In this way none of the source signal is wasted as the remaining part is fed directly into a last module. Another option is to couple the second end of the waveguide 10 to a further waveguide using a different type of end-connector 7. As such, the length of the waveguide arrangement 1 is virtually unlimited and depends on the signal strength of the source and the loss by propagation of the source signal as discussed below. A further option is to couple the second end of the waveguide 10 to a processor using an end-connector 7. This processor then receives and processes the received signal of the modules 5. It is to be appreciated for a person skilled in the art that the design of the end-connector 7 may vary depending on the type of connection required at the second end of the waveguide 10 and that the abovementioned possible functions of the second end of the waveguide 10 are not limiting.

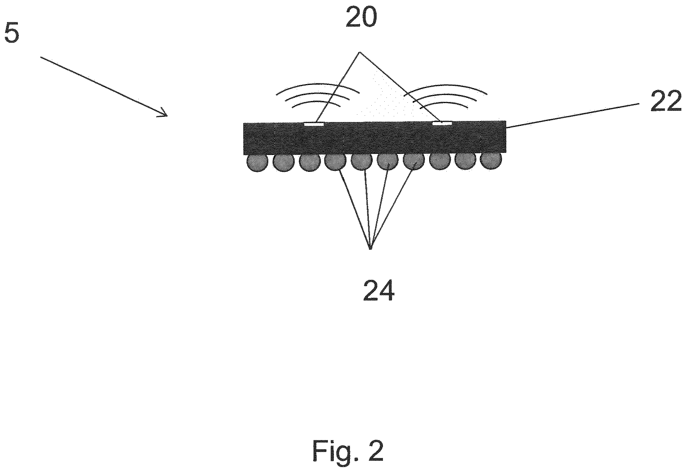

Figure 2 illustrates an individual module 5 of the MIMO radar system of the present disclosure. The module 5 includes two transmitters 20 and two receivers (not shown) collocated in a packaged system-on-chip (SOC) 22 with a plurality of connections 24. It is to be appreciated that for one skilled in the art the SOC design may be different and may include different components (e.g. single or multiple transmitters; more or less connections) depending on the type of radar system (e.g. MIMO radar module or monostatic radar module) used.

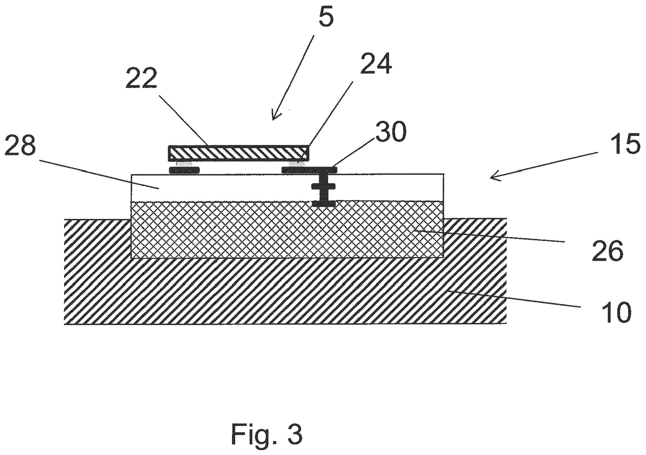

Figure 3 illustrates a cross-section through the waveguide arrangement 1 of the present disclosure focussed near one module 5 and illustrates the interface 15 between the waveguide 10 and the module 5. The interface 15 between the waveguide 10 and a module 5 comprises a first layer 26, a second layer 28, and a stack of pads 30.

The first layer 26 is a perforated zone having a low permittivity. This layer acts as a mechanical support for the second layer 28 and the stack of pads 30. Moreover, the low permittivity ensures that the first layer 26 does not substantially disturb the propagation of the source signal in the waveguide 10. In this way, the source signal is substantially unmodified by propagation in the waveguide 10. The second layer 28 determines how much of the source signal is transferred to the module 5. In particular, the stack of pads 30 couples the waveguide 10 to the module 5 by oscillating coherently with the source signal, and, as such, removing a part of the source signal from the waveguide 10. It is this stack of pads 30 that determines how much power of the source signal is taken at each interface 15 and thus correspondingly how many interfaces 15 can be placed on a waveguide 10 with a single source before the source signal is depleted. The relative fraction of the source signal that is transferred from the waveguide 10 via an interface 15 to the module 5 can depend on several factors: the material of the perforated layer 26; the material of the second layer 28; the shape of the stack of pads 30; the relative placement of the perforated layer 26 in the waveguide 10 as discussed below; or the material of the waveguide 10.

Naturally, the source signal also loses power due to propagation in the waveguide 10. The rate of this power loss depends on the waveguide 10 itself, in particular on the materials and structures used to form the waveguide 10. For typical plastic waveguides, this loss is in the range of 2 to 3 dB/m for source signals having frequencies around 60 GHz to 70 GHz. Depending on the loss by propagation, the distance between adjacent modules 5 may change. In general, a distance in a range between 5 cm and 80 cm, and, preferably, in a range between 10 cm and 60 cm, between adjacent modules 5 is possible for a radar system embedded in a car bumper. However, this spacing may also be lower than 5 cm depending on the materials used and the size of the modules.

As can be seen from Figure 3, the bottom part of the perforated layer 26 is placed in a crenel (not referenced in the Figures for the sake of clarity) of the waveguide 10. As used herein, the term "crenel" refers to a position in the waveguide 10 provided for placing an interface 15. In particular, the crenel is a hole in the waveguide 10 and can have different shapes, such as substantially rectangular, circular, triangular, etc. with the interface 15 having a corresponding shape. Since the waveguide 10 couples a plurality of modules 5 it also has a corresponding plurality of crenels. In other words, the waveguide 10 has a crenelated surface and is continuous below the crenelated surface. As such, in the context of the present disclosure, the waveguide is continuous indicates that a signal may propagate continuously in the waveguide 10 even though a part of the waveguide 10 has crenels provided for the interfaces 15.

As can be seen in Figure 3, the top part of the perforated layer 26 projects above the waveguide 10. It is to be appreciated for one skilled in the art that this is not essential for the present disclosure. The perforated layer 26 could also be located entirely within the waveguide 10 or have a bottom surface corresponding to the top surface of the waveguide 10, in other words the perforated layer 26 may be located entirely outside the waveguide 10. The relative placement of the perforated layer 26 with respect to the waveguide 10 and also its thickness relative to the thickness of the waveguide 10 is designed according to the fraction of the source signal power that needs to be transferred to the module 5. As illustrated in Figure 3, the bottom 70% of the perforated layer 26 is located within the waveguide 10. For example, if this would only be the bottom 10% the stack of pads 30 may be located further away from the waveguide 10 which could result in there being a larger loss as the source signal needs to propagate over a larger distance.

The second layer 28 forms a fixed surface which is used as a mounting surface for the module 5. This second layer 28 needs to be fixed to ensure that the entire module 5 is fixed and that the relevant parts are coupled with the source signal.

As can be seen in Figure 3, the stack of pads 30 makes contact with respective ones of connection 24 of the module 5 and couples the module 5 to the perforated layer 26 through the fixed layer 28. This stack of pads 30 forms the connection through which a part of the source signal is transferred from the perforated layer 26 to the SOC 22 via connection 24. It is to be appreciated for one skilled in the art that this stack of pads 30 can also have a different shape or size as long as it forms a connection that enables transferring the signal from the perforated layer 26 to the connection 24 of the module 5. This connection could also be an indirect connection depending on the design of the interface 15.

It is to be appreciated for one skilled in the art that while the interface 15 has been described in reference to a single module 5, interfaces 15 coupling the other modules 5 to the waveguide 10 may have a similar or identical structure. Moreover, it is to be appreciated that while Figure 3 shows the interface 15 and the module 5 on the top side of the waveguide 10, this is only illustrative. The interface 15 and the module 5 can have a different relative orientation, e.g. the interface 15 can also be placed on the bottom or on a side of the waveguide 10.

The waveguide arrangement 1 discussed above can be used to control a radar system (e.g. a multi-static radar system). This radar system can be a stand-alone system or be embedded in a vehicle for example. The waveguide arrangement 1 is used for making each of the modules 5 of the radar system use the same source signal representing a local oscillator of the modules 5 according to the following method.

A source signal is first generated in a source and is coupled to a first end of the waveguide 10 using a first end-connector 6. As stated above such an end-connector 6 is already known in the prior art. Because the waveguide 10 is continuous, the source signal propagates through the entire waveguide 10 without having transitions between different waveforms (e.g. a planar waveform to a rectangular waveform). Each interface 15 in the waveguide 10 transfers a part of the source signal that propagates in the waveguide 10 to the module 5 associated with the interface 15. In response to the source signal each of the modules 5 can then transmit a signal coherently with the other modules 5. The transmitted signals interfere with one another and with objects in the surveyed scene, in particular the transmitted signals are reflected and/or refracted by these objects. The next step is to receive a signal by the one or more receivers present in the plurality of modules 5. This received signal represents the surveyed scene and can be used to determine properties about the scene. The received signals are processed on the modules themselves and a digital representation of the baseband signal is transferred as an output of each module via well-known BUS interfaces on the modules. Alternatively, the received signals can also be processed in a separate processor. For example, this can be achieved by using an end-connector 7 on the second end of the waveguide 10 as a link to a separate processor. It is to be appreciated for one skilled in the art that processing the received signals can also be performed in various other manners.

The waveguide arrangement 1 discussed above can be constructed from a kit of parts comprising: the continuous waveguide 10; the plurality of interfaces, the first end-connector 6 configured for connecting the waveguide 10 to a source, and the second end-connector 7 configured for connecting the waveguide 10 to one of: a further module and a further waveguide. The individual parts have been discussed above. This kit of parts allows a flexible design of the waveguide arrangement 1. For example, depending on the needs of a specific radar system, both the number of interfaces 15 and the length of the waveguide 10 may be customized.

Although aspects of the present disclosure have been described with respect to specific embodiments, it will be readily appreciated that these aspects may be implemented in other forms.

## Claims

1. A waveguide arrangement (1) for coupling a plurality of modules (5) to a source, the waveguide arrangement (1) comprising:
a continuous waveguide (10) configured for guiding a signal provided by the source; and
a plurality of interfaces (15), each interface (15) being associated with one of the plurality of modules (5) and being configured for transferring a part of the source signal guided in the waveguide (10) to its associated module (5),
**characterized in that** each interface (15) comprises:
a first layer (26) configured for coupling the interface (15) to the waveguide (10);
a second layer (28) configured for forming a fixed surface for mounting one of the plurality of modules (5); and
a coupler (30) configured for coupling the first layer (26) to the module (5) associated with the interface (15).

2. The waveguide arrangement (1) according to claim 1, **characterized in that** the first layer (26) is perforated to form a low permittivity medium.

3. The waveguide arrangement (1) according to claim 1 or 2, **characterized in that** the coupler (30) of each interface (15) is a direct connection.

4. The waveguide arrangement (1) according to any one of the preceding claims, **characterized in that** the waveguide (10) has a crenelated surface, each crenel comprising a part of said first layer (26) of one interface (15) of the plurality of interfaces.

5. The waveguide arrangement (1) according to any one of the preceding claims, **characterized in that** the waveguide arrangement (1) further comprises a first end-connector (6) and a second end-connector (7), the first end-connector (6) being connected to a first end of the waveguide (10) and configured for connecting the waveguide (10) to the source, and the second end-connector (7) being connected to a second end of the waveguide (10) and configured for connecting the waveguide (10) to one of: a further module and a further waveguide.

6. The waveguide arrangement (1) according to any one of the preceding claims, **characterized in that** the waveguide (10) is formed by at least one of: a single-layer plastic; a multi-layer plastic; and a non-radiative dielectric guide.

7. The waveguide arrangement (1) according to any one of the preceding claims, **characterized in that** the waveguide (10) has a length between 5 cm and 80 cm between adjacent modules (5).

8. The waveguide arrangement (1) according to any one of the preceding claims, **characterized in that** the waveguide (10) has a length between 10 cm and 60 cm between adjacent modules (5).

9. A multi-static radar system comprising a source and a plurality of modules (5) configured for transmitting a signal provided by the source and for receiving a signal corresponding to the transmitted signal, **characterized in that** the plurality of modules (5) is coupled to the source using a waveguide arrangement (1) according to any one of the preceding claims.

10. The multi-static radar system according to claim 9, **characterized in that** the multi-static radar system is a multiple input multiple output radar system.

11. An automotive radar system installed in a vehicle, **characterized in that** the automotive radar system comprises the multi-static radar system according to claim 9 or 10.

12. A kit of parts adapted for constructing the waveguide arrangement (1) according to any one of the preceding claims 1 to 8, the kit comprising:
the continuous waveguide (10);
the plurality of interfaces (15);
a first end-connector (6) configured for connecting the waveguide (10) to a source; and
a second end-connector (7) configured for connecting the waveguide (10) to one of: a further module and a further waveguide.

13. A method for operating a multi-static radar system comprising a source and a plurality of modules (5), the method comprises:
generating a signal in the source;
coupling the source signal to the plurality of modules (5) using the waveguide arrangement (1) according to any one of the preceding claims 1 to 8;
transmitting the source signal from a transmitter of the plurality of modules (5);
receiving a signal corresponding to the transmitted signal in a receiver of the plurality of modules (5); and
processing the received signal.

## Patentansprüche

1. Eine Wellenleiteranordnung (1) zur Koppelung einer Vielzahl von Modulen (5) an eine Quelle, wobei die Wellenleiteranordnung (1) Folgendes umfasst:
einen durchgehenden Wellenleiter (10), konfiguriert, um ein von der Quelle bereitgestelltes Signal zu leiten; und
eine Vielzahl von Schnittstellen (15), wobei jede Schnittstelle (15) zu einem der Vielzahl von Modulen (5) zugehörig ist und konfiguriert ist, um einen Teil des im Wellenleiter (10) geleiteten Quellsignals zu seinem zugehörigen Modul (5) zu senden,
**dadurch gekennzeichnet, dass** jede Schnittstelle (15) Folgendes umfasst:
eine erste Schicht (26), konfiguriert, um die Schnittstelle (15) mit dem Wellenleiter (10) zu verbinden;
eine zweite Schicht (28), konfiguriert, um eine fixierte Oberfläche zu bilden, um eines der Vielzahl von Modulen (5) zu montieren; und
einen Koppler (30), konfiguriert, um die erste Schicht (26) an das zur Schnittstelle (15) zugehörige Modul (5) zu koppeln.

2. Die Wellenleiteranordnung (1) nach Anspruch 1, **dadurch gekennzeichnet, dass** die erste Schicht (26) perforiert ist, um ein Medium mit niedriger Dielektrizitätskonstante zu bilden.

3. Die Wellenleiteranordnung (1) nach Anspruch 1 oder 2, **dadurch gekennzeichnet, dass** der Koppler (30) jeder Schnittstelle (15) eine direkte Verbindung ist.

4. Die Wellenleiteranordnung (1) nach irgendeinem der vorigen Ansprüche, **dadurch gekennzeichnet, dass** der Wellenleiter (10) eine zinnenartige Oberfläche hat, wobei jedes Zinnenfenster einen Teil der erwähnten ersten Schicht (26) einer Schnittstelle (15) der Vielzahl von Schnittstellen umfasst.

5. Die Wellenleiteranordnung (1) nach irgendeinem der vorigen Ansprüche, **dadurch gekennzeichnet, dass** die Wellenleiteranordnung (1) ferner ein erstes End-Verbindungsteil (6) und ein zweites End-Verbindungsteil (7) umfasst, wobei das erste End-Verbindungsteil (6) mit einem ersten Ende des Wellenleiters (10) verbunden ist und konfiguriert ist, um den Wellenleiter (10) mit der Quelle zu verbinden, und wobei das zweite End-Verbindungsteil (7) mit einem zweiten Ende des Wellenleiters (10) verbunden ist und konfiguriert ist, um den Wellenleiter (10) mit einem der folgenden Elemente zu verbinden: ein weiteres Modul und ein weiterer Wellenleiter.

6. Die Wellenleiteranordnung (1) nach irgendeinem der vorigen Ansprüche, **dadurch gekennzeichnet, dass** der Wellenleiter (10) durch mindestens eines der folgenden Elemente gebildet ist: ein einschichtiger Kunststoff; ein mehrschichtiger Kunststoff; und ein strahlungsloser dielektrischer Leiter.

7. Die Wellenleiteranordnung (1) nach irgendeinem der vorigen Ansprüche, **dadurch gekennzeichnet, dass** der Wellenleiter (10) eine Länge zwischen 5 cm und 80 cm zwischen angrenzenden Modulen (5) hat.

8. Die Wellenleiteranordnung (1) nach irgendeinem der vorigen Ansprüche, **dadurch gekennzeichnet, dass** der Wellenleiter (10) eine Länge zwischen 10 cm und 60 cm zwischen angrenzenden Modulen (5) hat.

9. Ein multistatisches Radarsystem, welches eine Quelle und eine Vielzahl von Modulen (5) umfasst, konfiguriert, um ein durch die Quelle bereitgestelltes Signal zu senden und um ein dem gesendeten Signal entsprechendes Signal zu empfangen, **dadurch gekennzeichnet, dass** die Vielzahl von Modulen (5) unter Verwendung einer Wellenleiteranordnung (1) nach irgendeinem der vorigen Ansprüche an die Quelle gekoppelt ist.

10. Ein multistatisches Radarsystem nach Anspruch 9, **dadurch gekennzeichnet, dass** das multistatische Radarsystem ein Radarsystem mit mehreren Eingängen und mehreren Ausgängen ist.

11. Ein Kraftfahrzeugradarsystem, installiert in einem Fahrzeug, **dadurch gekennzeichnet, dass** das Kraftfahrzeugradarsystem das multistatische Radarsystem nach Anspruch 9 oder 10 umfasst.

12. Ein Satz von Teilen angepasst für den Aufbau der Wellenleiteranordnung (1) nach irgendeinem der vorigen Ansprüche 1 bis 8, wobei der Satz Folgendes umfasst:
den durchgehenden Wellenleiter (10);
die Vielzahl von Schnittstellen (15);
ein erstes End-Verbindungsteil (6), konfiguriert, um den Wellenleiter (10) mit einer Quelle zu verbinden; und
ein zweites End-Verbindungsteil (7), konfiguriert, um den Wellenleiter (10) mit einem der folgenden Elemente zu verbinden: ein weiteres Modul und ein weiterer Wellenleiter.

13. Ein Verfahren zum Betrieb eines multistatischen Radarsystems, das eine Quelle und eine Vielzahl von Modulen (5) umfasst, wobei das Verfahren Folgendes umfasst:
Erzeugen eines Signals in der Quelle;
Koppeln des Quellsignals an die Vielzahl von Modulen (5) unter Verwendung der Wellenleiteranordnung (1) nach irgendeinem der vorigen Ansprüche 1 bis 8;
Senden des Quellsignals von einem Sender der Vielzahl von Modulen (5);
Empfangen eines dem gesendeten Signal entsprechenden Signals in einem Empfänger der Vielzahl von Modulen (5); und
Verarbeiten des empfangenen Signals.

## Revendications

1. Agencement de guide d'onde (1) permettant de coupler une pluralité de modules (5) à une source, l'agencement de guide d'onde (1) comprenant :
un guide d'onde continu (10) configuré pour guider un signal fourni par la source ; et
une pluralité d'interfaces (15), chaque interface (15) étant associée à l'un de la pluralité de modules (5) et étant configurée pour transférer une partie du signal de source guidé dans le guide d'onde (10) à son module (5) associé,
**caractérisé en ce que** chaque interface (15) comprend :
une première couche (26) configurée pour coupler l'interface (15) au guide d'onde (10) ;
une seconde couche (28) configurée pour former une surface fixe pour monter l'un de la pluralité de modules (5) ; et
un coupleur (30) configuré pour coupler la première couche (26) au module (5) associé à l'interface (15).

2. Agencement de guide d'onde (1) selon la revendication 1, **caractérisé en ce que** la première couche (26) est perforée pour former un support de faible permittivité.

3. Agencement de guide d'onde (1) selon la revendication 1 ou 2, **caractérisé en ce que** le coupleur (30) de chaque interface (15) est une connexion directe.

4. Agencement de guide d'onde (1) selon l'une quelconque des revendications précédentes, **caractérisé en ce que** le guide d'onde (10) a une surface crénelée, chaque créneau comprenant une partie de ladite première couche (26) d'une interface (15) de la pluralité d'interfaces.

5. Agencement de guide d'onde (1) selon l'une quelconque des revendications précédentes, **caractérisé en ce que** l'agencement de guide d'onde (1) comprend en outre un premier connecteur d'extrémité (6) et un second connecteur d'extrémité (7), le premier connecteur d'extrémité (6) étant connecté à une première extrémité du guide d'onde (10) et configuré pour connecter le guide d'onde (10) à la source, et le second connecteur d'extrémité (7) étant connecté à une seconde extrémité du guide d'onde (10) et configuré pour connecter le guide d'onde (10) à l'un de : un autre module et un autre guide d'onde.

6. Agencement de guide d'onde (1) selon l'une quelconque des revendications précédentes, **caractérisé en ce que** le guide d'onde (10) est formé par au moins l'un de : un plastique monocouche, un plastique multicouche, et un guide diélectrique non radiatif.

7. Agencement de guide d'onde (1) selon l'une quelconque des revendications précédentes, **caractérisé en ce que** le guide d'onde (10) a une longueur entre 5 cm et 80 cm entre des modules (5) adjacents.

8. Agencement de guide d'onde (1) selon l'une quelconque des revendications précédentes, **caractérisé en ce que** le guide d'onde (10) a une longueur entre 10 cm et 60 cm entre des modules (5) adjacents.

9. Système radar multistatique comprenant une source et une pluralité de modules (5) configurés pour transmettre un signal fourni par la source et pour recevoir un signal correspondant au signal transmis, **caractérisé en ce que** la pluralité de modules (5) est couplée à la source en utilisant un agencement de guide d'onde (1) selon l'une quelconque des revendications précédentes.

10. Système radar multistatique selon la revendication 9, **caractérisé en ce que** le système radar multistatique est un système radar à entrées multiples et sorties multiples.

11. Système radar automobile installé dans un véhicule, **caractérisé en ce que** le système radar automobile comprend le système radar multistatique selon la revendication 9 ou 10.

12. Kit de pièces adapté pour la construction de l'agencement de guide d'onde (1) selon l'une quelconque des revendications 1 à 8 précédentes, le kit comprenant :
le guide d'onde continu (10) ;
la pluralité d'interfaces (15) ;
un premier connecteur d'extrémité (6) configuré pour connecter le guide d'onde (10) à une source ; et
un second connecteur d'extrémité (7) configuré pour connecter le guide d'onde (10) à l'un de : un autre module et un autre guide d'onde.

13. Procédé de fonctionnement d'un système radar multistatique comprenant une source et une pluralité de modules (5), le procédé comprenant :
la génération d'un signal dans la source ;
le couplage du signal de source à la pluralité de modules (5) en utilisant l'agencement de guide d'onde (1) selon l'une quelconque des revendications 1 à 8 précédentes ;
la transmission du signal de source depuis un émetteur de la pluralité de modules (5) ;
la réception d'un signal correspondant au signal transmis dans un récepteur de la pluralité de modules (5) ; et
le traitement du signal reçu.
